(19) **Europäisches Patentamt European Patent Office Office européen des brevets**

(11) **EP 4 538 178 A1**

(12) **EUROPEAN PATENT APPLICATION**

(43) Date of publication:
16.04.2025 Bulletin 2025/16

(21) Application number: 24206253.7

(22) Date of filing: 11.10.2024

(51) International Patent Classification (IPC):
*B64D 11/06* (2006.01)    *B60N 2/66* (2006.01)

(52) Cooperative Patent Classification (CPC):
**B64D 11/0647; B60N 2/66**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.10.2023 US 202363543907 P**

(71) Applicant: **Bombardier Inc.**
**Dorval QC H4S1Y9 (CA)**

(72) Inventors:
• **XI, Fengfeng**
**Dorval, H4S 1Y9 (CA)**
• **JIANG, Tianhao W.**
**Dorval, H4S 1Y9 (CA)**
• **ZHONG, Xianzhi**
**Dorval, H4S 1Y9 (CA)**
• **PHAM, Minh Duc**
**Dorval, H4S 1Y9 (CA)**

(74) Representative: **HGF**
**HGF Limited**
**1 City Walk**
**Leeds LS11 9DX (GB)**

(54) **AN AIRCRAFT SEAT WITH INTELLIGENT BACK SUPPORT AND A BACK SUPPORT DEVICE**

(57) An intelligent back support device, backrest assembly, and an aircraft seat having the back support device installed are disclosed. The back support device includes: a pressure-sensing apparatus for attachment to a backrest of a chair for detecting pressure received in a plurality of regions of a backrest surface of the backrest; a back support device for attachment to the backrest, the back support device configured to displace a portion of the backrest surface based on the pressure detected in at least one of the plurality of regions of the backrest surface; and a controller device connected to the pressure-sensing apparatus and the back support device, the controller configured to control the back support device.

**FIG. 2**

EP 4 538 178 A1

**Description**

**TECHNICAL FIELD**

The disclosure relates generally to aircraft furniture, and more particularly to aircraft seats having a back support device.

**BACKGROUND**

Commercial and business aircraft are designed for transporting people. Due to the limited space available onboard the aircraft, it can be challenging to design a cabin interior space that promotes passenger comfort. Long flight journeys in an aircraft cabin can often bring discomfort to passengers that are restrained in an aircraft seat.
Improvement is desirable.

**SUMMARY**

In one aspect, the disclosure describes an aircraft seat for installation in an aircraft cabin, the seat includes: a seat pan frame supporting a seat pan, a backrest assembly and a controller device. The backrest assembly includes: a backrest frame connected to the seat pan frame, the backrest frame supporting a backrest surface; a pressure-sensing apparatus attached to the backrest surface for detecting pressure received in a plurality of regions of the backrest surface; and a back support device attached to the backrest frame and configured to displace a portion of the backrest surface based on the pressure detected in at least one of the plurality of regions of the backrest surface. The controller device is connected to the pressure-sensing apparatus and the back support device, and configured to control said displacement of the portion of the backrest surface by the back support device.
In some embodiments, the pressure-sensing apparatus is a resistive pressure sensor.
In some embodiments, the resistive pressure sensor is made at least in part using Velostat™.
In some embodiments, the plurality of regions correspond to one or more of: an lumbar region, an upper back region, a right bolster region and a left bolster region of the backrest surface.
In some embodiments, the back support device includes: a support panel and a biasing member, the support panel configured to be deformed by force exerted by the biasing member and in turn displace the portion of the backrest surface.
In some embodiments, the biasing member includes a spring made of nickel titanium or nitinol.
In some embodiments, the controller device is configured to: receive data from the pressure-sensing apparatus; calculate a respective average pressure value in each of the plurality of regions of the backrest surface based on the received data; calculate an error value based on the respective average pressure values; determine, based on the error value, a target state of the biasing member; and send electronic signals representing a command to control a current in the biasing member based on the target state.
In some embodiments, the controller device includes a current controller and the command is sent to the current controller for adjusting the current in the biasing member.
In some embodiments, the target state includes one of: actuation, de-actuation, and hold position.
In some embodiments, a magnitude of the current is determined based on the target state.
Embodiments may include combinations of the above features.
In another aspect, the disclosure describes a back support assembly including: a pressure-sensing apparatus for attachment to a backrest of a seat for detecting pressure received in a plurality of regions of a backrest surface of the backrest; a back support device for attachment to the backrest, the back support device configured to displace a portion of the backrest surface based on the pressure detected in at least one of the plurality of regions of the backrest surface; and a controller device connected to the pressure-sensing apparatus and the back support device, the controller device configured to control said displacement of the portion of the backrest surface by the back support device.
In some embodiments, the pressure-sensing apparatus is a resistive pressure sensor.
In some embodiments, the resistive pressure sensor is made at least in part using Velostat™.
In some embodiments, the plurality of regions correspond to one or more of: an lumbar region, an upper back region, a right bolster region and a left bolster region of the backrest surface.
In some embodiments, the back support device includes: a support panel and a biasing member, the support panel configured to be deformed by force exerted by the biasing member and in turn displace the portion of the backrest surface.
In some embodiments, the biasing member includes a spring made of nickel titanium or nitinol.
In some embodiments, the controller device is configured to: receive data from the pressure-sensing apparatus; calculate a respective average pressure value in each of the plurality of regions of the backrest surface based on the received data; calculate an error value based on the respective average pressure values; determine, based on the error value, a target state of the biasing member; and send electronic signals representing a command to control a current in the biasing member based on the target state.

In some embodiments, the controller device includes a current controller and the command is sent to the current controller for adjusting the current in the biasing member.

In some embodiments, the target state includes one of: actuation, de-actuation, and hold position.

In some embodiments, a magnitude of the current is determined based on the target state.

Embodiments may include combinations of the above features.

In a further aspect, the disclosure describes a backrest cushion for attachment to a seat, the cushion comprising: a body having a backrest support surface, a top surface, a bottom surface, and a back surface; a pressure-sensing apparatus attached to the backrest support surface for detecting pressure received in a plurality of regions of the backrest support surface; a back support device attached to the pressure-sensing apparatus, the back support device configured to displace a portion of the backrest support surface based on the pressure detected by the pressure-sensing apparatus in at least one of the plurality of regions of the backrest support surface; and a controller device connected to the pressure-sensing apparatus and the back support device, the controller device configured to control said displacement of the portion of the backrest support surface by the back support device.

In some embodiments, the backrest cushion further includes one or more fasteners for removable attachment to the seat.

In some embodiments, the back support device includes: a support panel and a biasing member, the support panel configured to be deformed by force exerted by the biasing member and in turn displace the portion of the backrest support surface.

In some embodiments, the pressure-sensing apparatus is a resistive pressure sensor.

In some embodiments, the resistive pressure sensor is made at least in part using Velostat™.

In some embodiments, the plurality of regions correspond to one or more of: an lumbar region, an upper back region, a right bolster region and a left bolster region of the backrest support surface.

In some embodiments, the back support device includes: a support panel and a biasing member, the support panel configured to be deformed by force exerted by the biasing member and in turn displace the portion of the backrest support surface.

In some embodiments, the biasing member includes a spring made of nickel titanium or nitinol.

In some embodiments, the controller device is configured to: receive data from the pressure-sensing apparatus; calculate a respective average pressure value in each of the plurality of regions of the backrest support surface based on the received data; calculate an error value based on the respective average pressure values; determine, based on the error value, a target state of the biasing member; and send electronic signals representing a command to control a current in the biasing member based on the target state.

In some embodiments, the controller device includes a current controller and the command is sent to the current controller for adjusting the current in the biasing member.

In some embodiments, the target state includes one of: actuation, de-actuation, and hold position.

In some embodiments, a magnitude of the current is determined based on the target state.

Embodiments may include combinations of the above features.

Further details of these and other aspects of the subject matter of this application will be apparent from the detailed description included below and the drawings.

## BRIEF DESCRIPTION OF THE DRAWINGS

Reference is now made to the accompanying drawings, in which:

**FIG. 1** is a cross-sectional illustration of a fuselage for an aircraft;

**FIG. 2** is a schematic exploded view of an example aircraft seat with an intelligent back support mechanism in the fuselage for an aircraft;

**FIG. 3** is a schematic diagram showing part of a backrest assembly and a controller of the example aircraft seat in **FIG. 2;**

**FIG. 4A** shows an example embodiment of the controller for the intelligent back support mechanism in the example aircraft seat in **FIG. 3;**

**FIG. 4B** shows an example embodiment of the controller for the intelligent back support mechanism with two biasing members;

FIGs. 5A to 5C each shows a different example view of a support panel attached to a backrest frame;

FIG. 6 shows different regions on a backrest surface for pressure sensing;

FIGs. 7A and 7B each shows an example design of a biasing member for adjusting a support panel;

FIG. 7C shows an example embodiment of a nitinol spring that can be implemented as a biasing member, with the nitinol spring in an equilibrium state;

FIG. 7D shows an example embodiment of a nitinol spring that can be implemented as a biasing member, with the nitinol spring in a compressed state;

FIG. 8 shows a table with different spring stiffness parameters for designing a biasing member;

FIG. 9 shows a schematic view of an example pressure sensing mat;

FIG. 10A shows an example embodiment of the pressure sensing mat in FIG. 9;

FIG. 10B shows an example grid heat map generated by the pressure mat in FIG. 10A;

FIG. 11 shows an example process for intelligently adjusting a backrest surface based on real time pressure feedback;

FIG. 12 shows an example chart of a biasing member displacement with different blasting current applications;

FIG. 13 shows another example chart of a biasing member displacement with different holding current applications;

FIG. 14 illustrates comparisons between different designs of back support mechanisms;

FIG. 15A shows a pressure heat map before application of intelligent back support;

FIG. 15B shows a pressure heat map after application of intelligent back support;

FIG. 16A shows an example backrest cushion with intelligent back support installed onto a seat; and

FIG. 16B shows an example schematic diagram of the example backrest cushion in FIG. 16A installed onto a seat.

## DETAILED DESCRIPTION

To truly address the problem of backpain or soft tissues discomfort associated with sitting in a seat for an extended period of time, such as during a long haul flight, the backrest of a seat ideally should morph, e.g., change in shape, to conform with the human spine shape of the passenger or user. While a passive morphing cushion such as memory foam is available, it can only provide compressive and static morphing, meaning that the cushion can be pressed inward, but not pushed outward, nor be dynamically responsive to a posture change in the human spine.

The present disclosure describes aircraft cabins and aircraft furniture that, in some embodiments, help promote passenger comfort and productivity. For example, an aircraft seat is disclosed with an intelligent back support mechanism for adjusting a backrest surface of the seat based on real time pressure values sensed from the backrest surface.

Disclosed herein are embodiments of a back support system, which may in some embodiments include an aircraft seat, a back support device, or a backrest cushion, provide continuous sitting comfort through active sensing and control of backrest pressure applied to one or more regions of the human back when a human is sitting in a seat or a chair having the back support device or the backrest cushion, which provides active and localized morphing features to conform with the human spine shape of the user. The embodiments may include, for example, a patch-based cushion morphing utilizing smart-material actuators or biasing members that can be readily embedded in a seat; a pressure sensing cushion cover made of smart textile materials; and an intelligent back support mechanism implementing a human spine modeling method for identification of one or more unsupported areas (or insufficiently supported areas) that need localized support. Some embodiments disclosed herein can be integrated with an existing seat without structural modification of the seat.

A back support device as well a backrest cushion can be for installation or attachment onto a conventional aircraft seat or a conventional chair, providing a custom-like experience in an otherwise rigid, fixed seat, by implementing an intelligent back support mechanism for adjusting one or more regions in a support surface based on real time pressure values sensed from the support surface.

In some embodiments, the intelligent back support mechanism is configured to continuously adjust the backrest surface or the support surface to provide lumbar support to a user sitting in the aircraft seat or chair.

Aspects of various embodiments are described through reference to the drawings.

The term "attached" may include both direct attachment (in which two elements contact each other) and indirect attachment (in which at least one additional element is located between the two elements). The term "substantially" as used herein may be applied to modify any quantitative representation which could permissibly vary without resulting in a change in the basic function to which it is related.

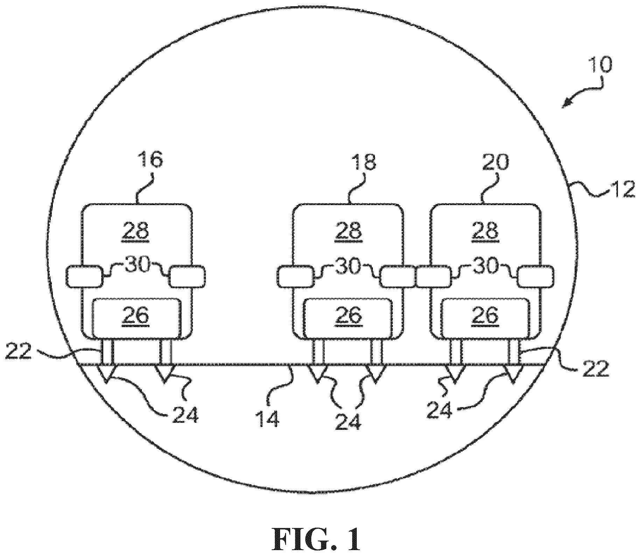

**FIG. 1** is a cross-sectional illustration of an aircraft cabin 10. Aircraft cabin 10 may be part of any manned aircraft such as corporate, private, commercial (e.g., passenger) aircraft for example. In some embodiments, aircraft cabin 10 may be part of a business jet for example.

While a circular cross-section has been selected for the cabin 10 depicted in **FIG. 1** , it is noted that the cross-sectional shape of the cabin 10 is not critical to operation any embodiment of the present invention. It is contemplated, for example, that the cabin 10 alternatively may present a square or oval configuration, among others. In other words, the cabin 10 may take any shape without departing from the scope of the present invention. For ease of illustration, a circular cross-section for the fuselage 10 has been selected for the various embodiments of the invention that are depicted herein.

Additionally, it is noted that the size of the cabin 10 is not critical to the operation of the present invention. The cabin 10 may be proportionately larger or smaller depending upon type of aircraft. In addition, the seats 16, 18, 20 in the aircraft may be larger or smaller depending upon the size and style of the aircraft. As should be apparent, therefore, the relative proportions of the various elements of the aircraft (with respect to one another) may be altered without departing from the scope of the present invention.

As illustrated in **FIG. 1,** the cabin 10 includes a floor 14 positioned within the body 12. Seats 16, 18, 20 for passengers are positioned on the floor 14.

As should be known to those skilled in the art, the seats 16, 18, 20 typically include legs 22 that are secured in tracks 24 that are incorporated into the floor 14. The tracks 24 permit the seats 16, 18, 20 to be moved in a direction fore and aft of the fuselage 10. For safety reasons, the seats 16, 18, 20 typically cannot be moved from their secure positions within the tracks 24 without proper tools and equipment. In other words, passengers usually are not able to move any of the seats 16, 18, 20 within the tracks 24 under normal operating conditions.

Concerning the tracks 24 and the seats 16, 18, 20, it is known to the art to construct seats 16, 18, 20 that may be moved a limited (or predetermined) distance within the tracks 24, in either or both of the fore and aft directions. Seats 16, 18, 20 capable of being moved within the tracks 24 are referred to herein as adjustable seats. Adjustable seats typically are provided with a lever that permits the limited (or predetermined) movement of the seats 16, 18, 20 in fore and aft directions. Adjustable seats 16, 18, 20 may be made available for corporate and private aircraft.

For purposes of the present invention, adjustable seats 16, 18, 20 (that may move in the fore and aft directions via operation of a lever or other operating mechanism) may be employed without departing from the scope of the present invention. Adjustment of the seats 16, 18, 20 may be employed in lieu of or in addition to the adjustability parameters that are discussed in greater detail below.

As illustrated, the seats 16, 18, 20 include seat pans 26, backrests 28, and one or more arms 30, which may be stowable. These aspects of the seats 16, 18, 20 are provided merely for context, as the exact construction of the individual seats 16, 18, 20 is not critical to the present invention. The seats 16, 18, 20 (and any of the other seats described herein) may take any other form, shape, design, or construction without departing from the scope of the present invention. Moreover, although the illustrated embodiments are shown for seats in an aircraft, the seats can be used in any other type of vehicle or context where seating is required.

Each of the seats 16, 18, 20 is provided with two armrests 30. It is possible, however, that the seats 18, 20 may share a common armrest 30 without departing from the scope of the present invention. Other configurations may be known to those skilled in the art and are intended to be encompassed by the present invention.

Aircraft cabin 10 may be configured to accommodate one or more passengers therein and may also be referred to as a "passenger cabin". Aircraft cabin 10 (referred hereinafter as "cabin 10") may include floor 14, wall(s) 12 lining an interior side of a fuselage of the aircraft, window(s), and bulkhead(s) which may serve as room partitions within cabin 10. Cabin 10 may also include one or more articles of furniture resting on floor 14 such as one or more tables (not shown) for example.

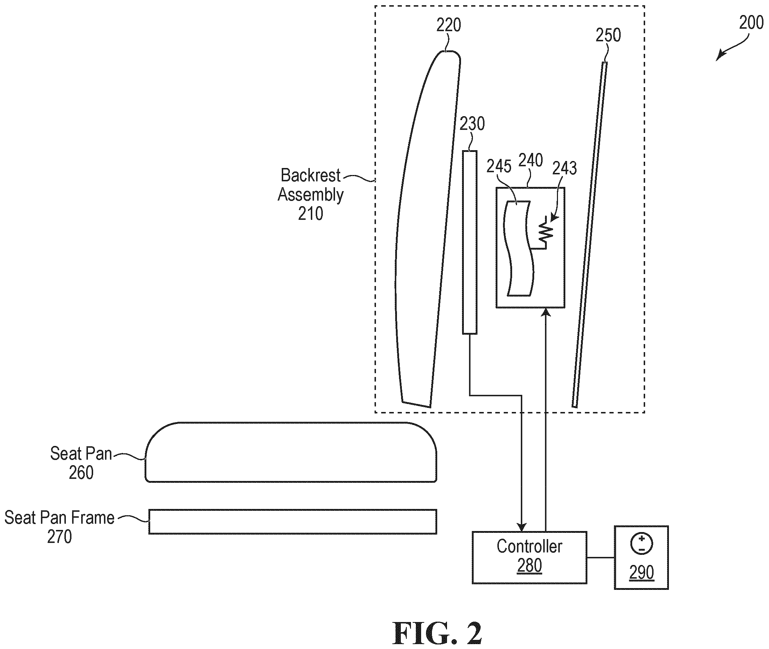

**FIG. 2** is a schematic exploded view of an example aircraft seat 200 with an intelligent back support mechanism in the cabin 10 of an aircraft. The aircraft seat 200 may have a seat pan frame 270 supporting a seat pan 260, and a backrest assembly 210. The backrest assembly 210 may include, in some embodiments: a backrest frame 250 connected to the seat pan frame 270, the backrest frame 250 supporting a backrest surface 220, a pressure-sensing apparatus 230 attached to the backrest surface 220 for detecting pressure received in a plurality of regions of the backrest surface, and a back support device 240 attached to the backrest frame 250 and configured to displace a portion of the backrest surface 220 based on the pressure detected in at least one of the plurality of regions of the backrest surface. The aircraft seat 200 also includes a controller device 280 connected to the pressure-sensing apparatus 230 and the back support device 240, the controller device 280 configured to control said displacement of the portion of the backrest surface 220 by the back support device 240. The controller device 280 (also referred to as controller 280) may be battery powered, or connected to a power source 290 for operation.

For ease of illustration, some connections between various components are omitted from **FIG. 2.** For example, the pressure sensing apparatus 230 is connected to the backrest surface 220 for sensing pressures in a plurality of regions, as further described in detail below.

The backrest assembly 210 may be housed by an upholstery fabric or material that is flexible and can conform to the geometry of the back of a passenger sitting in the aircraft seat 200. The backrest surface 220, for example, is made of a flexible material that can be stretched, deformed, displaced in part or in whole, when force is exerted by the back support device 240. The backrest surface 200 can return to its natural state when no force is applied to it by the back support device 240.

In some embodiments, the backrest surface 200 can be made of cushion or padding made of a flexible material, to provide comfort to the passenger.

In some embodiments, the back support device 240 may be electrically-controlled and include a support panel 245 and a biasing member 243, the support panel 245 configured to be deformed by force exerted by the biasing member 243 and in turn displace or deform one or more portions of the backrest surface 220.

The exact placement of pressure-sensing apparatus 230 and the back support device 240 within the backrest assembly 210 may be determined based on a number of factors. In some embodiments, a human spine modeling has been developed to identify one or more unsupported areas or regions that need localized support from the back support device 240. For instance, a parametric human spine model taking into consideration of 26 vertebrae and a range of motion for 23 intervertebral discs has been developed. By relating the parametric human spine model to various seat recline angles of aircraft seat 16, 18, 20, a spine shape can be predicted for various sitting postures.

For another example, a different parametric human spine model has been developed by taking into consideration common seat profiles (or cushion profiles) across different types of seats including aircraft seats.

Based on the two different parametric human spine models, contact and non-contact regions (or sub-regions) are determined between a seat profile and a human body. The determined contact and non-contact regions (or sub-regions) may be used to identify regions in the backrest surface 220 that require additional support.

For a passenger to feel comfortable in an aircraft seat, or in any seat, the spine of the passenger should be adequately supported by the seatback such that the spine maintains an ideal curvature shape even in a range of motion. For instance, a respective ideal curvature shape may be determined for one or more of: a lumbar (lower back) spine region, a thoracic (trunk) spine region, and a cervical (neck) spine region of the human spine, in different seating positions.

In order to adequately support the human spine of a passenger seated in the seat 16, 18, 20, the contour of the backrest surface 220 of the seat 16, 18, 20 is implemented to morph in one or more regions in order to respond to the passenger's spine movements and generally follows and supports the general contour of the human spine of the passenger, while adapting to movements of the passenger in real time or near real time.

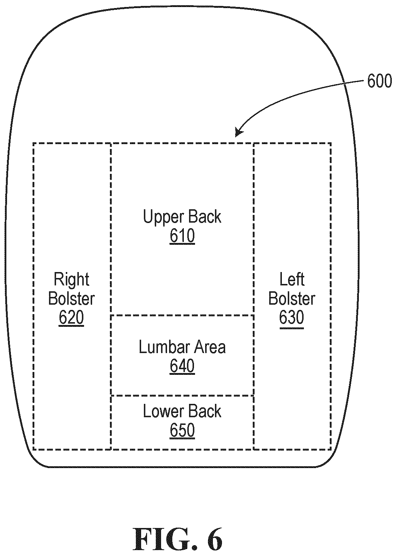

In some embodiments, a placement of pressure-sensing apparatus 230 and the back support device 240 within the backrest assembly 210 may be determined to be behind the lumbar region or area 640 (see e.g., **FIG. 6**) of the backrest surface 220 in order to provide adequate support to the lumbar spine region of an average passenger.

In other embodiments, a placement of pressure-sensing apparatus 230 and the back support device 240 within the backrest assembly 210 may be determined to be behind the upper back region or area 610 (see e.g., **FIG. 6**) of the backrest surface 220 in order to provide adequate support to the cervical (neck) spine region of an average passenger.

In yet other embodiments, two or more sets of pressure-sensing apparatus 230 and the back support device 240 may be implemented within the backrest assembly 210, such that a first set of pressure-sensing apparatus 230 and back support device 240 is placed behind the lumbar region 640 of the backrest surface 220 and a second set of pressure-sensing apparatus 230 and back support device 240 is placed behind the upper back region or area 610 of the backrest surface 220, such that the first back support device 240 can provide adequate support to the lumbar spine region of an average passenger and the second back support device 240 can provide adequate support to the cervical (neck) spine region of the same passenger, either independently or cooperating to maintain an ideal curvature shape of the human spine of said passenger in a range of seating positions. During operation, each pressure-sensing apparatus 230 in each respective set is configured to detect and determine pressure in a respective region (e.g., region 610 or 640) and in turn, the controller 280 operates the respective support device 240 in each respective region to provide adequate support in real time to the respective spine regions of the passenger, by morphing one or more sub-regions of the backrest surface 220.

For ease of illustration, only one set of pressure-sensing apparatus 230 and back support device 240 is shown in **FIG. 2,** it is understood, however, that two or more sets of pressure-sensing apparatus 230 and the back support device 240 may be installed within a backrest assembly 210 and connected to one controller 280. Most of the descriptions of the pressure-sensing apparatus 230 and the back support device 240 throughout this disclosure are made in reference to the embodiment shown in **FIG. 2,** though it is to be understood that similar configuration and modes of operations may apply to each pressure-sensing apparatus 230 and each back support device 240, if multiple sets are installed in one seat.

The back support device 240 has a relatively small footprint and size, compared to the aircraft seat 200, while exercising, in real time, precise and intelligent control of the backrest surface 220 in order to provide superior comfort, especially in the lumbar region, for a passenger in the aircraft seat 200. The back support device 240, and/or the pressure sensing apparatus 230, may be turned on or off with a switch (not shown).

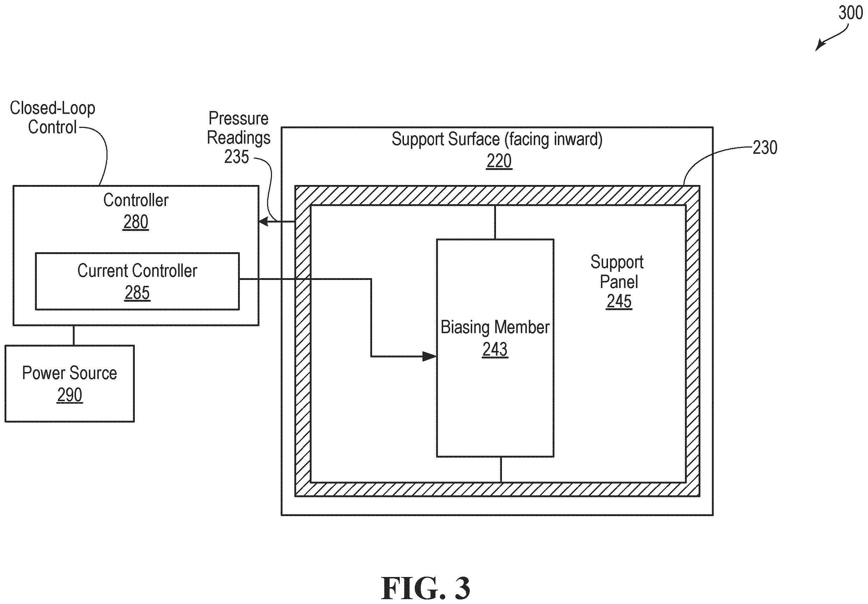

**FIG. 3** is a schematic diagram 300 showing part of a backrest assembly 210 and a controller 280 of the example aircraft seat 200 in **FIG. 2,** according to some example embodiments. In some embodiments, a pressure-sensing apparatus 230 is positioned between an interior surface of the backrest surface 220 and the support panel 245 of the back support device 240. The support panel 245 is connected to a biasing member 243, which is controlled by a current controller 285 within the controller device 280.

In some embodiments, a current control device (e.g., a current controller 285) is controlled by the microcontroller 288 to control the biasing member 243, as some blasting and holding current required for adjusting the biasing member 243 may be too large to pass through the microcontroller 288. To switch from a blasting current to a holding current, the microcontroller 288 can decrease its PWM output to the current controller 285, which in turn, decreases the output current.

In some embodiments, the pressure-sensing apparatus 230 may include a pressure sensor configured to generate and transmit one or more pressure readings to the controller 280 based on real time pressure received in one or more regions of the backrest surface 220.

In some embodiments, the pressure-sensing apparatus 230 may include a resistive pressure sensor.

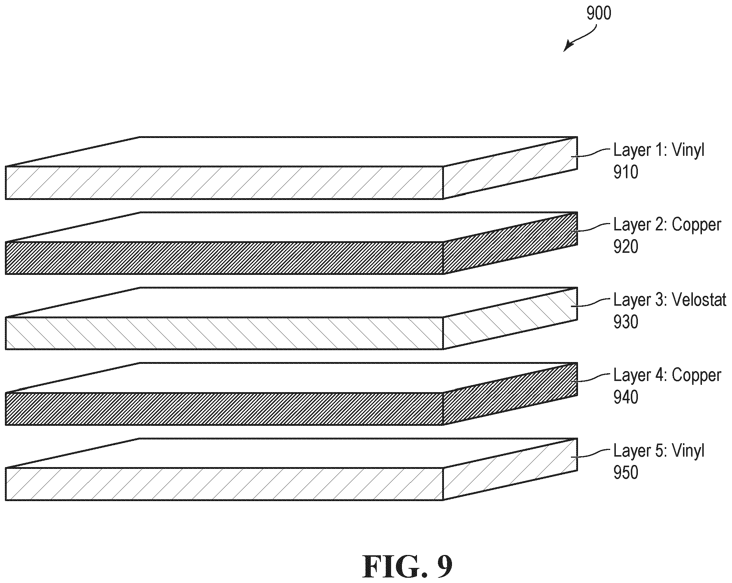

**FIG. 9** shows a schematic view of a pressure mat 900 as part of an example pressure sensing apparatus 230. The pressure mat 900 may be attached (e.g., adhered) to a lower region of the interior side of the backrest surface 220 for detecting forces and pressures exerted by a user or passenger when seated in the aircraft seat 200.

In some embodiments, the pressure mat 900 uses Velostat™ as a resistive pressure sensor, where resistance of Velostat™ varies based on a pressure applied thereto. For example, outer layers 910, 950 may be nonconductive material such as vinyl, followed by conductive layers 920, 940 and the innermost layer 930 may be Velostat™ acting as pressure sensor. Each conductive layer 920, 940 may include electrodes (e.g. copper strips), by arranging the electrodes as parallel copper strips, with the copper strips in layer 920 placed perpendicular to the copper strips in layer 940, a matrix or grid sensing structure is formed. The resistance between any top and bottom electrodes or copper strips can be proportional to the pressure at their respective point of intersection.

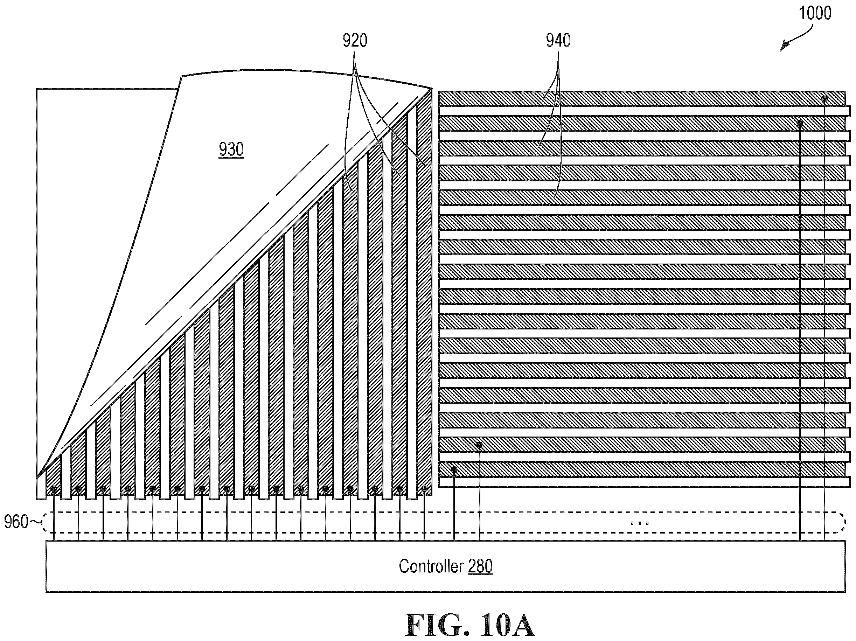

**FIG. 10A** shows an example embodiment 1000 of the pressure mat 900 in **FIG. 9,** just prior to final assembly. Conductive layer 920 has a column of copper strips placed in parallel and conductive layer 940 has a row of copper strips in parallel, each strip being connected to an end of a respective conductive wire 960, which has the other end connected to the controller 280 (e.g., to a microcontroller 288 inside controller 280). The column of copper strips are placed perpendicular to the row of coppers strips, sandwiched by the Velostat™ layer 930.

In some example embodiments, as a user sits against the backrest surface 220, one or more regions of the backrest surface 220 has different pressure applied thereto (see e.g. **FIG. 6**), and the pressure-sensing apparatus 230 including the pressure mat 900 attached to the surface 220 can therefore receive different pressure feedback based on the pressure applied to the one or more regions of the backrest surface 220.

In some embodiments, pressure feedback from the backrest surface 220 in the form of resistance readings from pressure mat 900 may be captured by a plurality of conductive wires 960, each respective wire 960 has a first end connected to (e.g., soldered to) an end of a respective strip of conductive material in layers 920, 940, and a second end connected to a respective input pin of the controller 280. The controller 280 receives resistance readings from the wires 960 to generate an average pressure reading in one or more regions of the backrest surface 220, determine a target state of the biasing member 243, and in turn generate one or more electric signals to control the biasing member 243, implementing a closed-loop intelligent control system. In some embodiments, the resistance readings are calibrated against weights by the controller 280 to interpret the resistance readings as pressure received.

Once assembled with the conductive wires 960 in place, the assembly including the pressure mat 900 acts as a matrix pressure sensor. For example, the first conductive layer 920 may include $m$ copper strips, each connected to a respective input pin of a first set of input pins of controller 280 (each via a conductive wire 960), and the second conductive layer 940 may include $n$ copper strips, each connected to a respective input pin of a second set of input pins of controller 280 (each via a conductive wire 960); when the copper strips on the first conductive layer 920 are placed perpendicular to the copper strips on the second conductive layer 940, and with Velostat™ layer 930 in the middle of the two conductive layers 920, 940; the pressure mat 900 acts a matrix sensor apparatus having m x n sensors.

In one example embodiment, each of the conductive layers 920, 940 has 15 copper strips, and the final pressure mat 900 is implemented as a 15x15 matrix sensor, with 255 nodes.

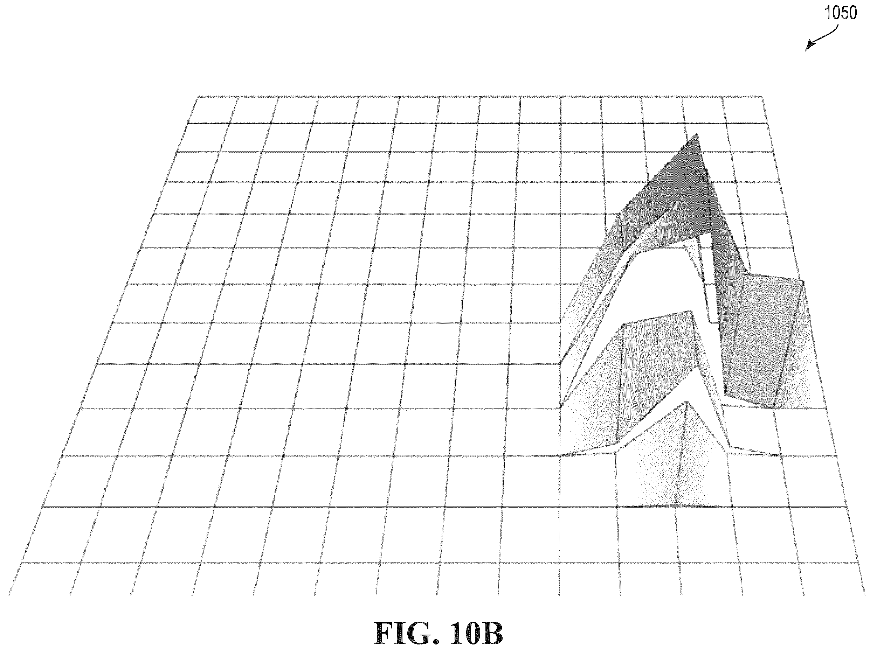

**FIG. 10B** shows an example grid heat map 1050 generated by the pressure mat 900 in **FIG. 10A,** generated based on pressure feedback e.g., real time resistance data received by the controller 280 from the plurality of nodes in the matrix sensor, via the conductive wires 960. The pressure feedback e.g., resistance data is generated in real time by a pressure applied to one or more regions of the backrest surface 220, as forces are exerted by a user or passenger to the backrest surface 220 when seated in the aircraft seat 200.

Pressure feedback 235 from the pressure- sensing apparatus 230 is obtained in real time or near real time based on detected forces from one of more regions of the backrest surface 220, and transmitted to the controller 280 for controlling of the biasing member 243. The biasing member 243 can, based on a magnitude of current sent from the current controller 285, expand or contract along a length and/ or width, or hold still without any changes.

In some embodiments, the controller device 280 is configured to receive data 235 from the pressure-sensing apparatus 230; calculate a respective average pressure value in each of the plurality of regions of the backrest surface 220 based on the received data 235; calculate an error value based on the respective average pressure values; determine, based on the error value, a target state of the biasing member 243; and send electronic signals representing a command to control a current in the biasing member 243 based on the target state.

The received data 235 may include, in some embodiments, direct pressure readings from the pressure-sensing apparatus 230.

The received data 235 may include, in some embodiments, resistance readings from the pressure-sensing apparatus 230, when the pressure-sensing apparatus 230 is a resistive pressure sensor such as a pressure sensing matt 900 made using Velostat™.

In some embodiments, the controller device 280 includes a current controller 285 and the command is sent to the current controller for adjusting the current in the biasing member. In some embodiments, the target state comprises one of: actuation, de-actuation, and hold position. In some embodiments, a magnitude of the current is determined based on the target state.

The support panel 245, which can be made of flexible material, is induced to change or maintain its shape corresponding to the physical displacements of the biasing member 243, and in turn displace one or more regions of the backrest surface 220 to support one or more regions, e.g., a lumbar region, of a back of the passenger sitting in the seat 200. The displacement may be, for example, along a z-axis perpendicular to the floor of the aircraft, or perpendicular to the ground if the back support device 240 is installed on a conventional chair in an office.

In some embodiments, the support panel 245 can be made of a series of spring materials. For example, SAE 1095 spring steel may be used to make the support panel 245. For another example, SAE 1074, or ASTM A231 spring steel may be used to make the support panel 245. For yet another example, chromium vanadium may be used to make the support panel 245. If stainless steel is preferred, ASTM A313 stainless type 302 or ASTM A666 stainless type 301 can be used to make the support panel 245.

In some embodiments, plastics can also be used if they have a large enough elasticity such as Nylon, to make the support panel 245.

The support panel 245 has a relatively small footprint, defined by a width and a length. In some embodiments, a possible range of sizes for the width of the support panel 245 is 17 to 25cm with 20cm being the 95th percentile fit (based on NASA™ anthropometric data). A length of the support panel 245 can range from 13 to 17cm with 15cm being the 95th percentile fit (based on NASA™ anthropometric data).

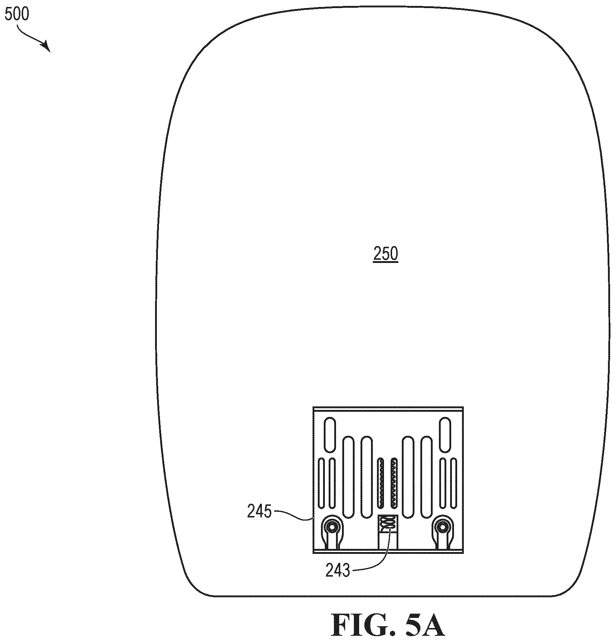

For example, in **FIGs. 5A** to **5C,** the support panel 245 has a dimension of 20cm x 15cm. The support panel 245 may be coupled to the backrest frame 250 using one or more fasteners, for example, using one or more of glue, blots, screws, clips, or nails. The biasing member 243 has two ends, with each respective end attached or coupled to a respective side of two opposing sides of the support panel 245 as to deform a top surface 242 of the support panel 245 when actuated (e.g. heated beyond a certain temperature) by a current from the controller 280.

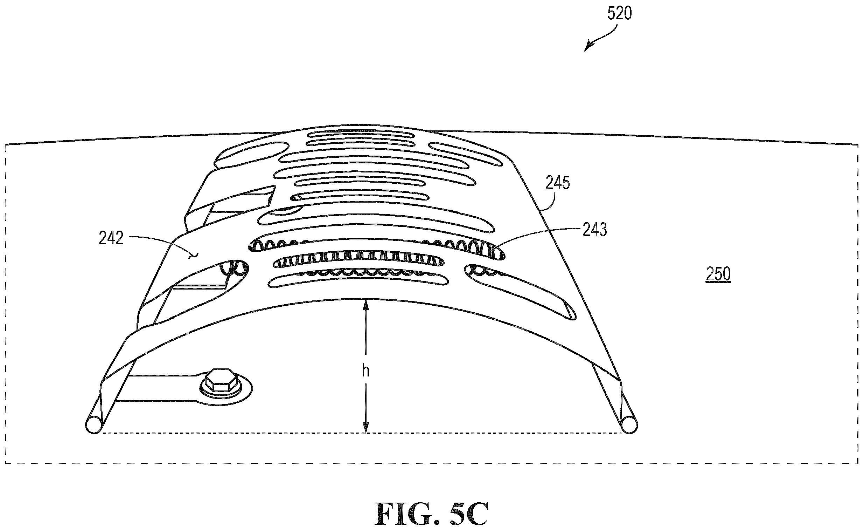

The deforming of the top surface 242 of the support panel 245 causes, in some embodiments, a distance from the top surface 242 to the surface of the backrest frame 250, represented by $h$ in **FIG. 5C,** to reach a predetermined height in order to exert force to and displace the backrest surface 220 to provide optimal and real-time support for a region (e.g., lumbar region 640 or lower back region 650) of the back of the passenger in the aircraft seat 200. In some embodiments, $h$ is determined to provide a displacement of 5-8 cm (e.g., 6 cm) along the z-axis of the support panel 245. The z-axis means an axis parallel to a floor or ground on which the seat 200 or chair is installed or placed.

A power source 290, which may be for example a battery installed within the aircraft seat 200, or an external power source, which may be for example a DC power supply, may be connected to the controller 280 for providing electricity to the controller 280.

In some embodiments, the biasing member 243 may be made of nickel titanium, or nitinol (an alloy of nickel titanium), which is super elastic and a shape memory alloy. A property of nitinol is shape memory, which means the biasing member 243 made of nitinol can undergo deformation (e.g., bend) at one temperature, and return to its natural, undeformed state when cooled. The heating can be provided by, for example, a current transmitted to the nitinol. Adjustment of a magnitude of the current supplied to the biasing member 243 made of nitinol may in turn adjust the shape, volume, or other morphological characteristics of the biasing member 243, based on certain phase changes of nitinol, for example, from martensite (low temperature) to austenite (high temperature).

As electric current is applied to a nitinol wire, the resistance of nitinol to the electric current generates sufficient heat (ohmic heating) to bring the nitinol through its transition temperature, in which case it contracts. A counterforce known as bias force occurs in the nitinol wire in the opposite direction of its contraction. The bias force resets the nitinol wire back to its original length when in the low temperature phase (e.g., when less or no current is applied).

In some embodiments, the biasing member 243 may be a spring made at least in part using nitinol wire (also referred to as "nitinol spring"). As the magnitude of current supplied to the biasing member 243 from the controller 280 changes, phase change of nitinol occurs, and in turn, a stiffness of the spring also changes. For nitinol springs actuated by electrical currents, a higher transition temperature provides a faster cycle rate while a lower transition temperature consumes less electricity.

For example, the biasing member 243 may be a two-way nitinol spring 243 that resets to the equilibrium state when cooled. As the two-way nitinol spring 243 is heated by the current, the nitinol spring 243 contracts and exerts force such that the two sides of a support panel 245, with each side being coupled to a respective end of the nitinol spring 243, are pulled close towards the center of the nitinol spring 243, thereby forming an arch reaching or having a height $h$ (see e.g., **FIG. 5C**) between the backrest frame 250 and surface 242 of the support panel 245. In this manner, the support panel 245 is configured to be deformed by force exerted by the biasing member 243 and in turn displace at least one portion of the backrest surface 220. Once cooled, the nitinol spring 243 extends by itself exerting force in the opposite direction, thereby relaxing the support panel 245.

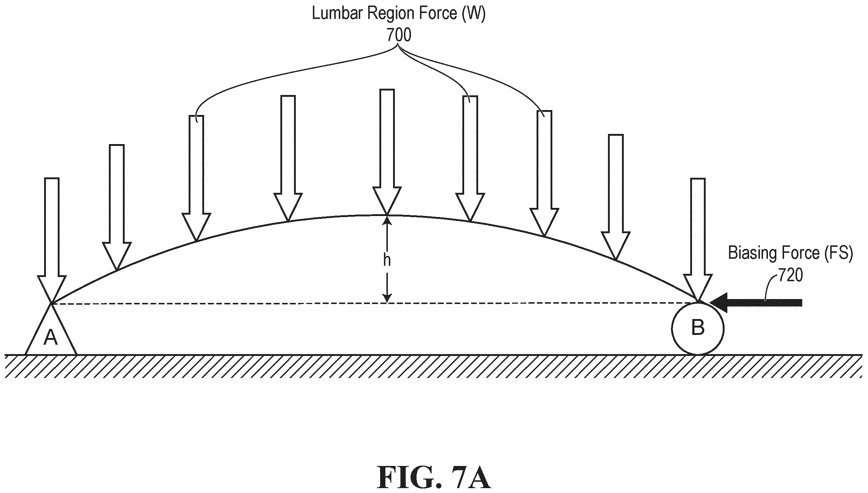

An equivalent system has been used to determine a spring constant required in one example embodiment of the back support device 240, which takes into consideration the relationship between the lumbar region force 700 (in Watts) of a user or passenger, and a biasing force 720 (in F or newton) exerted by the biasing member 243 (spring), as shown in **FIG. 7A**.

Based on research, a support panel 245 in some example embodiments is configured to provide a maximum displacement $h$ along the z-axis as shown in **FIG. 7A**. For instance, $h$ may be of approximately 5- 8 cm (e.g., 5 or 6 cm) to provide optimal lumbar comfort. The z-axis means an axis parallel to a floor or ground on which the seat 200 or chair is installed or placed. For example, the z-axis is an axis parallel to the lumbar region force 700, and the support panel 245 exerts a force in a direction against the lumbar region force 700. In some embodiments, $h$ is determined to provide a displacement of 5-8 cm along the z-axis of the support panel 245, such that the support panel 245 exerts a force to the backrest surface 220 to provide optimal and real-time support for a region (e.g., lumbar region 640 or lower back region 650) of the back of the passenger in the aircraft seat 200.

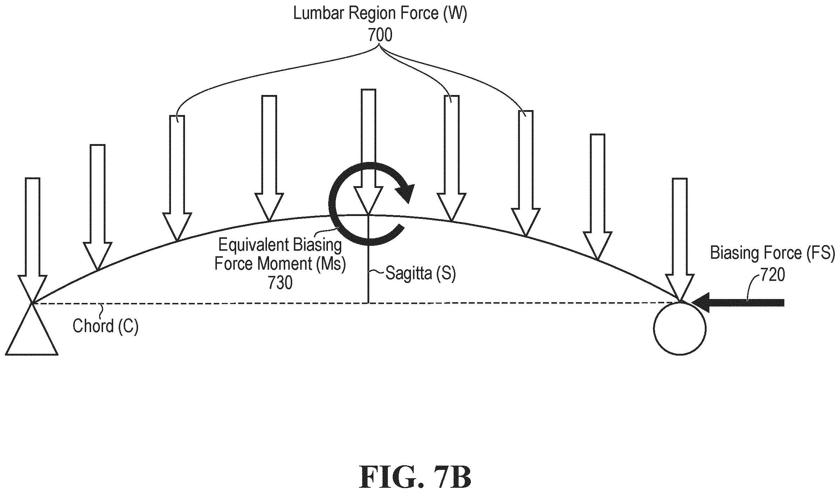

In the example embodiment as shown in **FIG. 7B,** force moments (Ms) 730 generated by equivalent biasing force of nitinol spring 243 are used to determined in order to achieve the optimal lumbar comfort. An example calculation is as follows:

$$v_{M_S,max} \geq v_{W,max} \qquad \textbf{(Eqn. 1)}$$

$$v_{M_S,max} = \frac{-3M_S L^2}{24EI} \qquad \textbf{(Eqn. 2)}$$

$$v_{W,max} = \frac{5WL^4}{384EI} \qquad \textbf{(Eqn. 3)}$$

$$M_S = S \times F_S \qquad \textbf{(Eqn. 4)}$$

$$F_S = k\Delta C \qquad \textbf{(Eqn. 5)}$$

$$k = \frac{G_{nitinol} d_s^4}{8ND_s^4} \qquad \textbf{(Eqn. 6)}$$

and,

| Variable | Value |
|----------|-------|
| $S_{max}$ | 0.06m |
| $\Delta C$ | 0.03m |
| $C_{max}$ | 0.10m |

In some example embodiments, the determined spring stiffness parameter (also known as spring constant) k may be 1694 N/m, and the following condition needs to be satisfied by a biasing member 243 in the form of a nitinol spring:

$$\text{Spring Low (N/m)} < k < \text{Spring High (N/m)}$$

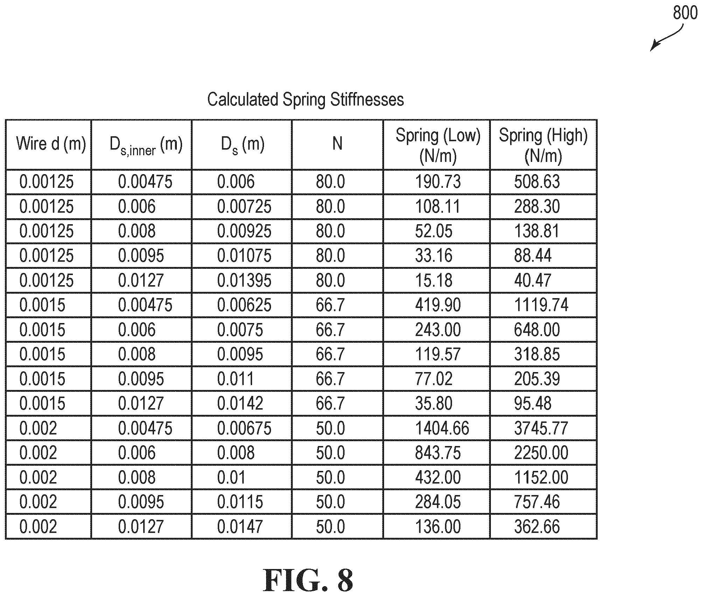

**FIG. 8** shows a table 800 with different spring stiffness parameters for designing a biasing member 243 in the form of nitinol spring, where dimensions are based on stock helical nitinol from Kellogg's Research Labs. In some example embodiments, based on the pre-determined value of spring stiffness parameter k (e.g., 1694 N/m), a number of spring stiffness configurations as shown in **FIG. 8** may be selected, including one or more of:

| No. | Wire d (m) | $D_{s,inner}$ (m) | $D_s$ (m) | N | Spring (Low) (N/m) | Spring (High) (N/m) |
|-----|-----------|-------------------|-----------|------|--------------------|--------------------|
| 1 | 0.002 | 0.00475 | 0.00675 | 50.0 | 1404.66 | 3745.77 |
| 2 | 0.002 | 0.006 | 0.008 | 50.0 | 843.75 | 2250.00 |

While both configuration nos. 1 and 2 shown both satisfying the prerequisite condition *Spring Low (N/m) < k < Spring High (N/m),* configuration no. 1 having greater spring stiffness parameter (e.g., *Spring High (N/m) of 3745.77*) may be selected when a greater amount of support is required by the support panel 245, while configuration no. 2 having a less spring stiffness parameter (e.g., *Spring High (N/m)* of 2250) may be selected when a lower cooling temperature is required.
As a non-limiting example, a biasing member 243 (nitinol spring) based on configuration 1 above is selected and made based on the manufacturing parameters in the table below, having a wire diameter of 2 mm and a mandrel size of 4.75 mm.

| Property | Value |
|----------|-------|
| Wire Diameter | 2mm |
| Mandrel Size | 4.75mm |
| Pitch | Tight |
| Transition Temperature | 80°C |
| Length | 10 cm |

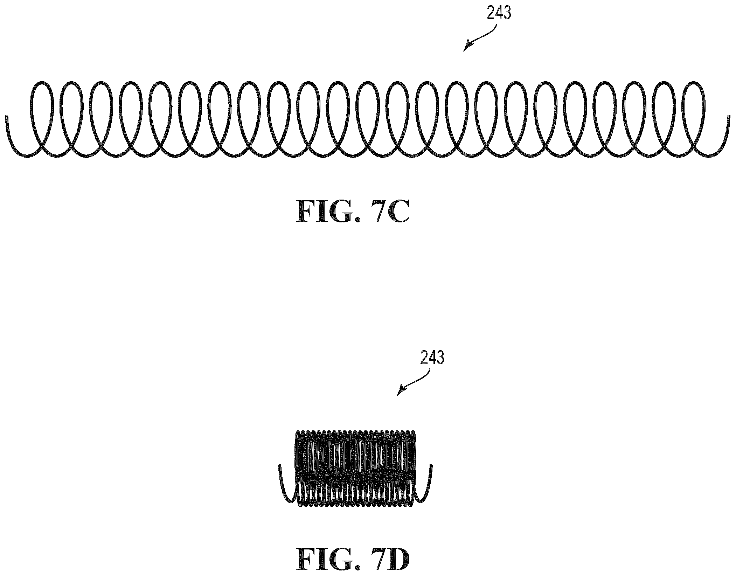

**FIG. 7C** shows an example embodiment of a nitinol spring that can be implemented as a biasing member 243, with the nitinol spring in an equilibrium state, while **FIG. 7D** shows the same nitinol spring a compressed state. As the two-way nitinol spring 243 is heated by the current, the nitinol spring 243 contracts (as shown in **FIG. 7D**) and exerts force such that the two sides of support panel 245, with each side being coupled to a respective end of the nitinol spring 243, are pulled close towards the center of the nitinol spring 243, thereby forming an arch reaching or having a height *h* (see e.g., **FIG. 5C**) between the frame 250 and surface 242 of the support panel 245. Once cooled, the nitinol spring 243 extends by itself exerting force in the opposite direction (e.g., **FIG. 7C**), thereby relaxing the support panel 245.
In some example embodiments, the controller device 280 may include at least one processor, one or more memory, one or more I/O interfaces, and optionally a network interface.
Each processor may be, for example, a microprocessor or microcontroller, a digital signal processing (DSP) processor, an integrated circuit, a field programmable gate array (FPGA), a reconfigurable processor, a programmable read-only memory (PROM), or any combination thereof.
Each memory may include, for example, random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like.

Each I/O interface enables the controller device 280 to interconnect with one or more input means or devices, such as conductive wires, a keyboard, mouse, camera, touch screen and a microphone, or with one or more output means or devices, such output of a voltage with a certain range (e.g., -10 V to +10 V), or output of a current with a certain range (e.g., -10 A to +10 A).

Each network interface, which may be optional, enables the controller device 280 to communicate with other components, to exchange data with other components, to access and connect to network resources, to serve applications, and perform other computing applications by connecting to a network (or multiple networks) capable of carrying data including the Internet, Ethernet, plain old telephone service (POTS) line, public switch telephone network (PSTN), integrated services digital network (ISDN), digital subscriber line (DSL), coaxial cable, fiber optics, satellite, mobile (e.g., 4G, 5G network), wireless (e.g. Wi-Fi, WiMAX), SS7 signaling network, fixed line, local area network, wide area network, and others, including any combination of these.

In some example embodiments, the controller device 280 may include a microcontroller 288 having a plurality of input pins and a plurality of output pins. In some example embodiments, the controller device 280 may further include a current controller 285 connected to one or more output pins of the microcontroller 288.

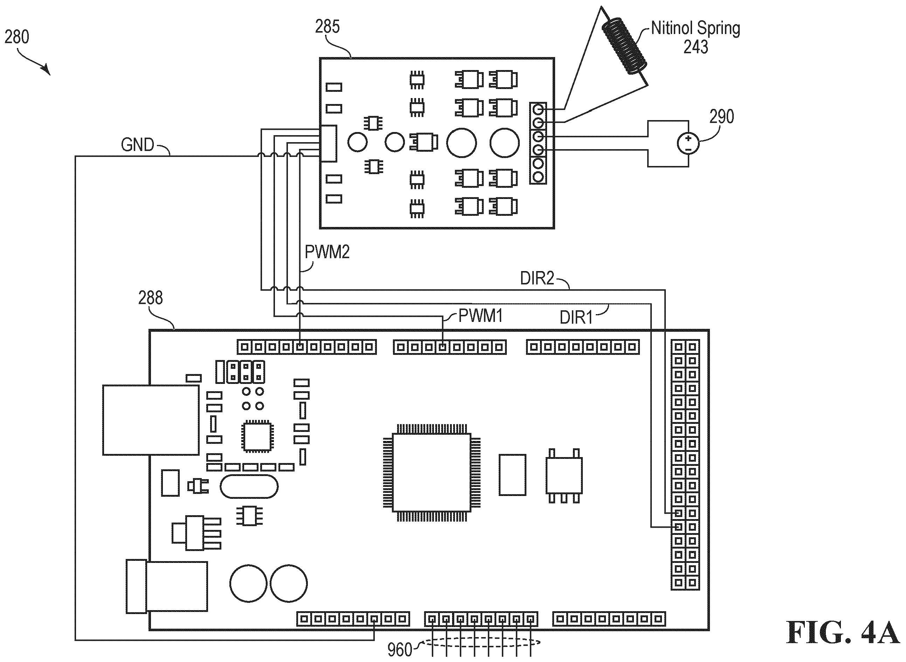

**FIG. 4A** shows an example embodiment of the controller 280 for the intelligent back support mechanism in the example aircraft seat in **FIG. 3**. The controller 280 may include a current controller 285 (e.g., Cytron™ MDD10A) connected to a power source 290 (e.g., LCS50US05 power supply with maximum output of 5V and 10A) and a microcontroller 288 (e.g., Arduino Mega™). A first biasing member 243 in the form of nitinol spring is connected to output ports of the current controller 285 for biasing or actuating a first support panel 245.

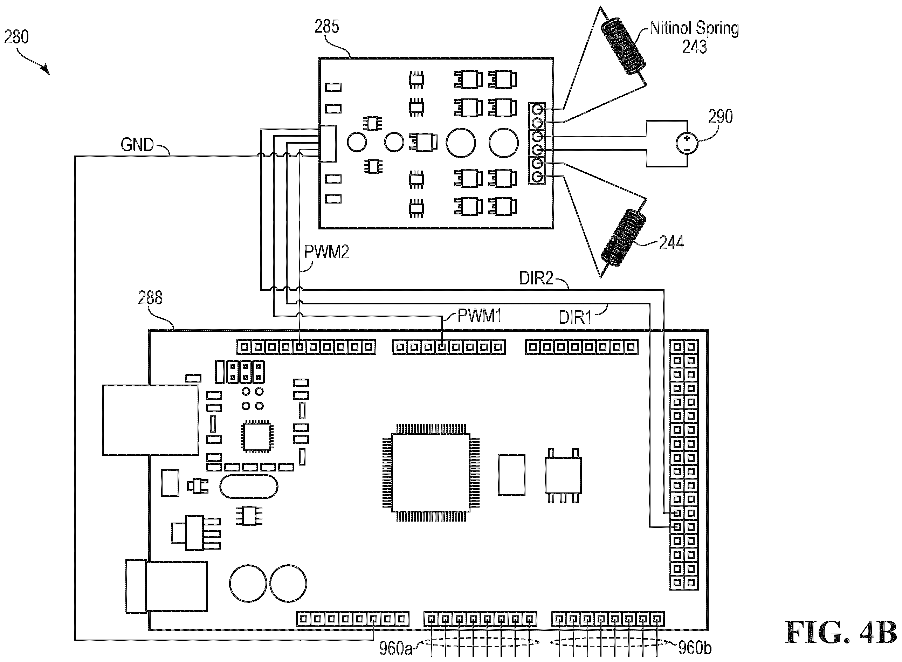

In some embodiments, when a second set of pressure-sensing apparatus and back support device is installed within the backrest assembly 210, the conductive wires 960b of the second pressure-sensing apparatus are connected to input pins of the microcontroller 288 and a second biasing member 244 in the form of nitinol spring as shown in **FIG. 4B** is connected to output ports of the current controller 285 for biasing or actuating a support panel within the second back support device.

In some embodiments, data representing pressure feedback 235 from the backrest surface 220 (e.g., in the form of resistance readings) from the pressure mat 900 may be captured by a plurality of conductive wires 960, 960a, 960b each respective wire 960 has a first end connected to (e.g., soldered to) an end of a respective strip or wire of conductive material the pressure mat 900, and a second end connected to a respective input pin of the controller 280 as shown in **FIGs. 4A** and **4B.**

In **FIG. 4A,** there is one set of conductive wires (e.g., copper wires) 960 from one pressure-sensing apparatus 230. In **FIG. 4B,** there are two sets of conductive wires (e.g., copper wires) 960a, 960b, with the first set of conductive wires 960a from a first pressure-sensing apparatus 230 corresponding to a first nitinol spring 243, and the second set of conductive wires 960b from a second pressure-sensing apparatus corresponding to a second nitinol spring 244.

The controller 280 receives data 235, e.g., pressure or resistance readings, from the wires 960, 960a, 960b to generate an average pressure reading in one or more regions of the backrest surface 220, determine a target state of the biasing member 243, and in turn generate one or more electric signals to control the biasing member 243, implementing a closed-loop intelligent control system. In some embodiments, the resistance readings are calibrated against weights by the controller 280 to interpret the resistance readings as pressure received.

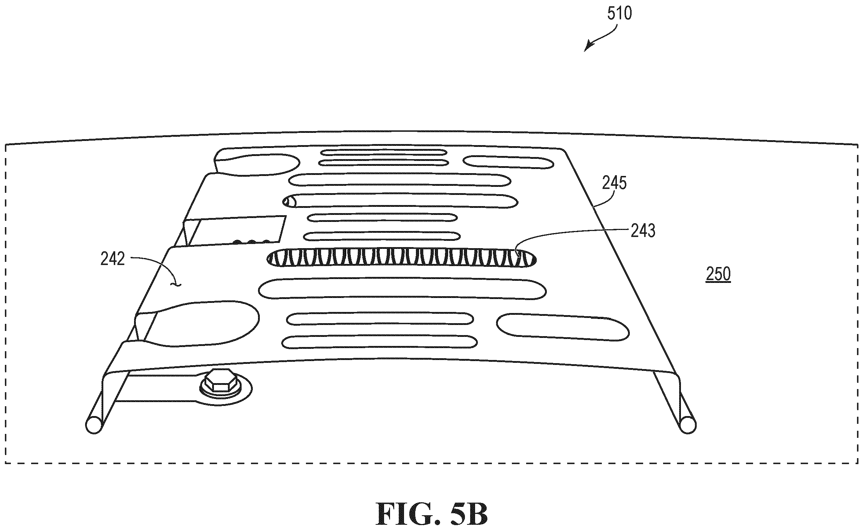

**FIGs. 5A** to **5C** each shows a different example view of a support panel attached to a backrest frame. **FIG. 5A** shows a front view 500 of a backrest frame 250 of a seat 200 with a support panel 245 attached thereof, and a biasing member 243 attached to back of the support panel 245, between the support panel 245 and the backrest frame 250. In **FIGs. 5A, 5B, 5C,** the support panel 245 may be attached to the backrest frame 250 via different means, for example, the support panel 245 may be attached to the backrest frame 250 using one or more fasteners.

**FIG. 5B** shows a first side view 510 of the support panel 245 in an unactuated, natural state, with the top surface 242 of the support panel 245 being substantially flat. **FIG. 5C** shows a second side view 520 of the support panel 245 in an actuated state proving optimal lumbar comfort, where a maximum distance between the surface 242 of the support panel 245 and the backrest frame 250 has a height h, which may be for example, 6 cm. The height h may be reached when the nitinol spring 243 is heated to contract as shown in **FIG. 7D,** for example.

**FIG. 6** shows different regions, including an upper back region 610, a right bolster region 620, a left bolster region 630, a lumbar region 640, and a lower back region 650 (collectively regions 600) on a backrest surface 220. As mentioned, average pressure readings from regions 600 are used to determine a target state and a current magnitude that is to be applied to the biasing member 243 for adjusting a backrest surface 220. In one embodiment, an example condition for activating the back support device 240 is a lumbar region pressure reading of 6.8kPa or less, or when the max pressure difference (also know as max pressure error) is greater than 10%.

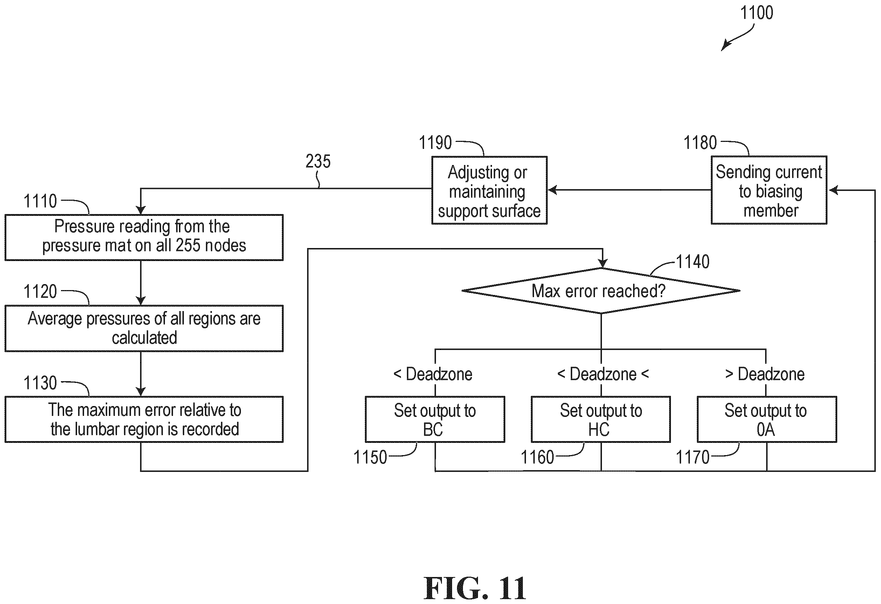

**FIG. 11** shows an example process 1100 for intelligently adjusting a backrest surface 220 based on real time pressure feedback. The controller 280, which may include for example microcontroller 288, at step 1110, receives real-time or near real-time pressure feedback 235 from a pressure-sensing apparatus 230.

At step 1120, the controller 280 uses the pressure feedback 235 to determine a respective average pressure in each respective region 610, 620, 630, 640, 650 (e.g., see **FIG. 6**) by averaging the pressure feedback from each node in the respective region.

For example, for a given region, such as region 650, the controller 280 receives resistance data 235 from the pressure mat 900 acting as a grid sensor, from all the nodes within the region 650, and in turn generates an average pressure reading in the region 650 of the backrest surface 220. For instance, the resistance data in the feedback 235 between any top and bottom electrodes (e.g., copper strips) in a node on the grid sensor (see **FIG. 10B**) is proportional to, and can be used to calculate, a pressure at their respective point of intersection in the node. Each node in the grid sensor or pressure mat 900 contains a pair of top and bottom electrodes (e.g., copper strips).

In a similar fashion, the average pressure of each region in regions 600 of the backrest surface 220 are calculated by the controller 280 in real time, based on the feedback 235 from the pressure-sensing apparatus.

At step 1130, a maximum pressure difference or maximum pressure error (also referred to as "max error") is determined relative to a lumbar region 640 of the backrest surface 220. For example, a respective difference between the average pressure in the lumbar region 640 and a respective average pressure in each of the surrounding regions 610, 620, 630, 650 is calculated, and the max error can be determined to be the maximum value among the respective differences. That is, the maximum error can be calculated based on a maximum difference between a target region (e.g., the lumbar region 640) and any of its surrounding regions.

A set of example pseudo code is presented below for computing the max error at step 1140, where *Lumbar-Pressure* represents an average pressure of the lumbar region 640, and each of Region 1, Region 2, Region 3 and Region 4 represents a respective surrounding region, namely, upper back region 610, right bolster region 620, left bolster region 630, and lower back region 650:

*A1Pressure = calculated average Region 1 Pressure based on readings from pressure-sensing apparatus*

*LumbarPressure = calculated average Lumbar Pressure based on readings from pressure-sensing apparatus*

$$maxError = abs(A1Pressure - LumbarPressure)$$

*A2Pressure =calculated average Region 2 Pressure based on readings from pressure-sensing apparatus*

$$if\ abs(A2Pressure - LumbarPressure) > maxError$$

$$maxError = abs(A2Pressure - LumbarPressure)$$

*A3Pressure = calculated average Region 3 Pressure based on readings from pressure-sensing apparatus*

$$if\ abs(A3Pressure - LumbarPressure) > maxError$$

$$maxError = abs(A3Pressure - LumbarPressure)$$

*A4Pressure = calculated average Region 4 Pressure based on readings from pressure-sensing apparatus*

$$if\ abs(A4Pressure - LumbarPressure) > maxError$$

$$maxError = abs(A4Pressure - LumbarPressure)$$

The value of the max error can be, at step 1140, converted to a ratio and used to determine a current setting 1150, 1160, 1170. A current setting may include, for example, a type and/or a magnitude of a current.

In some embodiments, in order to determine the current setting 1150, 1160, 1170, the value of the max error can be used to first determine a target state of the biasing member 243. The target state may include, for example: actuation, de-actuation, or hold position (no change).

The target state of the biasing member 243 is then used to determine a corresponding current setting, which may be for instance, a blasting current or BC (actuation) 1150 for activating the biasing member 243 (e.g., nitinol spring) to exert the required force through the backrest surface 220 for supporting passenger, a holding current or HC (hold position) 1160 for maintaining the current shape or pressure applied by the backrest surface 220, or no current (de-actuation) 1170, in which case the biasing member 243, if previously activated, will return back to its shape.

In some embodiments, a deadzone value, which may be predetermined based on experiments, is used to configure the current setting. In setting the deadzone value, an example goal may be to reduce the number of times the controller 280 has to switch between BC and HC. For instance, a 10% for deadzone value may be used.

In some embodiments, in order to determine the current setting 1150, 1160, 1170, a target state of the biasing member 243 is first determined based on the max error, for instance, if the max error is greater than a pre-determined threshold (e.g., 10%), the target state of the biasing member 243 may be expansion or contraction, and in which case, the current setting is determined (e.g., expansion requires cooling or no current, or contraction requires heating or BC).

At step 1180, the controller 280 may generate one or more electric signals for setting the current to control the biasing member 243, implementing a closed-loop intelligent control system. The current may be generated by a current controller 285, for example.

At step 1190, the biasing member 243 upon the current applied thereto, may maintain its current shape, expand, or contract, thereby adjusting or maintain the support panel 245 and in turn, the backrest surface 220.

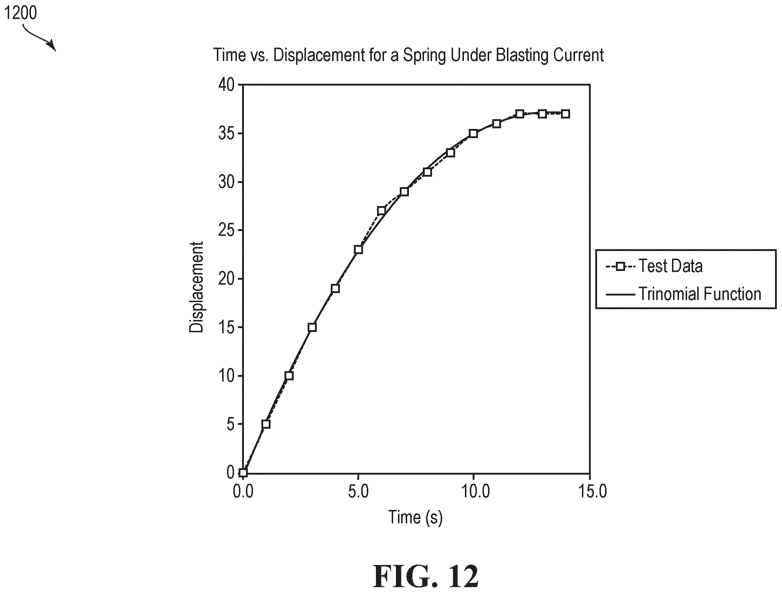

FIG. 12 shows an example chart 1200 of a biasing member 243 (e.g., nitinol spring) displacement with different current applications across time. The blasting current (BC) is a high current to actuate the spring towards its programmed shape. BC will heat the nitinol material quickly towards activation temperature. BC can lead to the fastest movement from the stretched shape of the biasing member 243.

In some embodiments, a magnitude for BC is a value in the range of 8-10A (e.g., 9A).

As the blasting current is a function of the biasing member 243 (e.g., nitinol spring) used, if a length of the support panel 245 is longer, the springs will have to be longer, and thus requiring a higher blasting current. On the flip side, if the length is smaller than 13cm, larger springs may be required which in turn, needing a larger wire diameter and thus, a high blasting current.

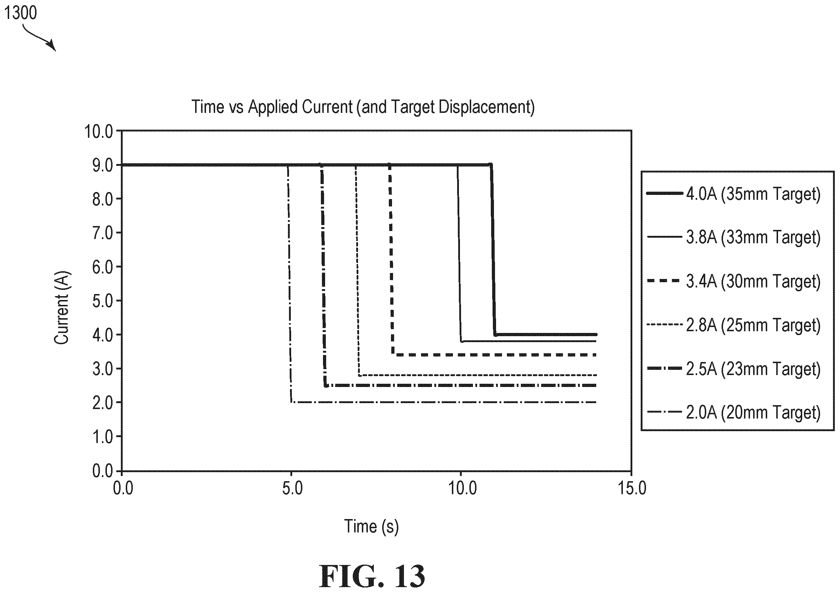

FIG. 13 shows an example chart 1300 of a biasing member displacement with different HC application. The holding current (HC) is a lower current than BC to maintain the shape of the biasing member 243 (e.g., nitinol spring). HC will maintain the nitinol temperature to hold the shape. Therefore the controller 280 is configured to switch from BC to HC at a time when a desired shape or pressure is achieved in the backrest surface 220. For example, the switch from BC to HC may occur at a predetermined period known to achieve a target state of the biasing member 243 (e.g., nitinol spring). For another example, the switch from BC to HC may occur at a time when the pressure feedback 235 as detected by pressure-sensing apparatus 230 indicates that sufficient support is reached for the user in the seat 200. In general, a higher HC will result in higher material actuation.

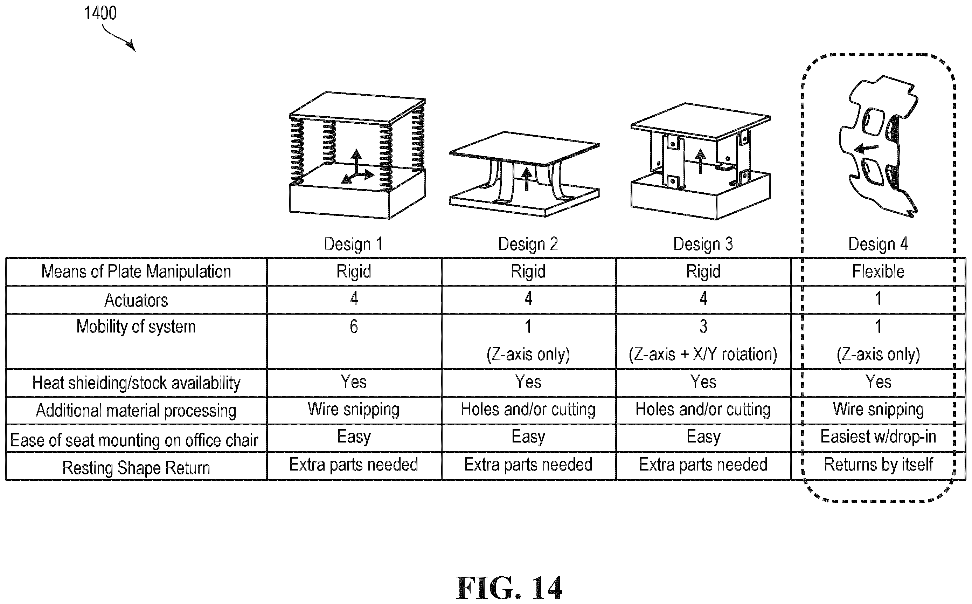

FIG. 14 illustrates a comparison chart 1400 showing comparisons between different designs of back support panels 245. Four designs were proposed and compared in designing and implementing the embodiments disclosed herein. Each design presented was evaluated based on: available adjustments (translation, rotation along x/y/z axis), total number of actuators for adjustment, material processing required, ease of implementation, and ability to return to its "unactuated" shape. Design 4, which corresponds to an embodiment shown in FIG. 2, requires only one actuator (e.g., biasing member 243) for providing a flexible contour of the support panel 245.

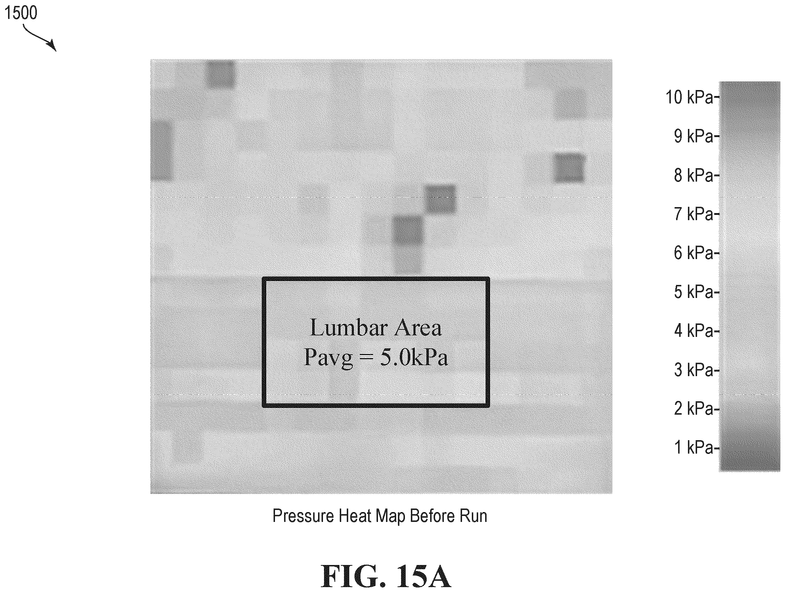

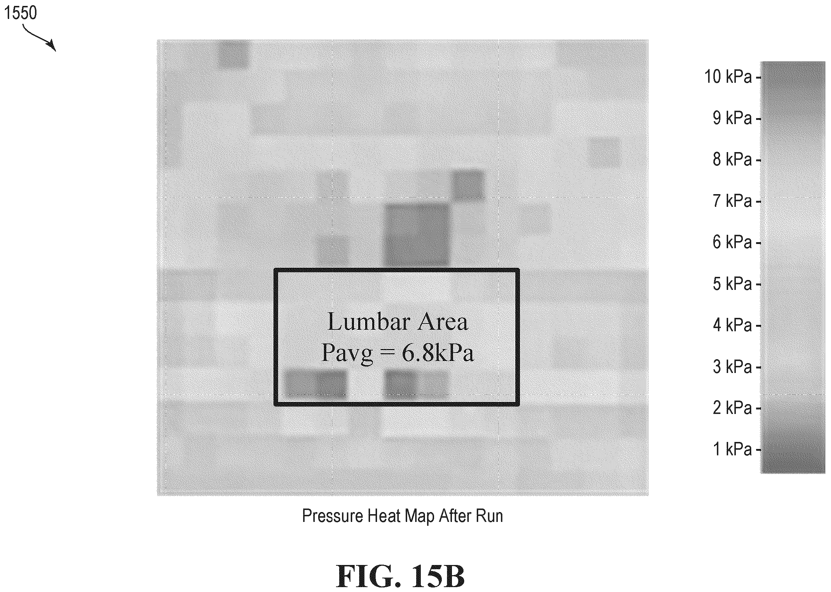

FIG. 15A shows a pressure heat map 1500 before application of intelligent back support. FIG. 15B shows a pressure heat map 1550 after application of intelligent back support. The nitinol actuated panel were able to improve the pressure distribution. As shown, the pressure readings became more evenly spread across the back region including the lumbar region from 5.0kPa to 6.8kPa.

In some embodiments, a back support assembly is provided as a standalone assembly for installation within a seat, such as for example an aircraft seat 16, 18, 20. The back support assembly may be manufactured and sold to manufacturers of aircraft seats or other types of chairs for insertion into the backrest assembly of an aircraft seat or a different type of seat or chair.

The back support assembly may include a pressure-sensing apparatus 230 for attachment to a backrest of a chair for detecting pressure received in a plurality of regions of a backrest surface of the backrest; a back support device 240 for attachment to the backrest, the back support device 240 configured to displace a portion of the backrest surface based on the pressure detected in at least one of the plurality of regions of the backrest surface; and a controller device 280 connected to the pressure-sensing apparatus 230 and the back support device 240, the controller device 280 configured to control said displacement of the portion of the backrest surface by the back support device 240.

In some embodiments, the pressure-sensing apparatus 230 is a resistive pressure sensor. For example, a pressure sensor made using Velostat™ as the one shown in FIG. 9.

In some embodiments, the back support device 240 may include: a support panel 245 and a biasing member 243, the support panel 245 configured to be deformed by force exerted by the biasing member 243 and in turn displace the portion of the backrest surface.

In some embodiments, the biasing member may be a nitinol spring 243 made of nickel titanium.

In some embodiments, the controller device 280 is configured to: receive data from the pressure-sensing apparatus 230; calculate a respective average pressure value in each of the plurality of regions 600 of the backrest surface based on the received data; calculate an error value based on the respective average pressure values; determine, based on the error value, a target state of the biasing member 243; and send electronic signals representing a command to control a current in the biasing member 243 based on the target state.

In some embodiments, the controller device 280 includes a current controller 285 and the command is sent to the current controller for adjusting the current in the biasing member 243.

In some embodiments, the target state may be one of: actuation, de-actuation, and hold position.

In some embodiments, a magnitude of the current is determined based on the target state.

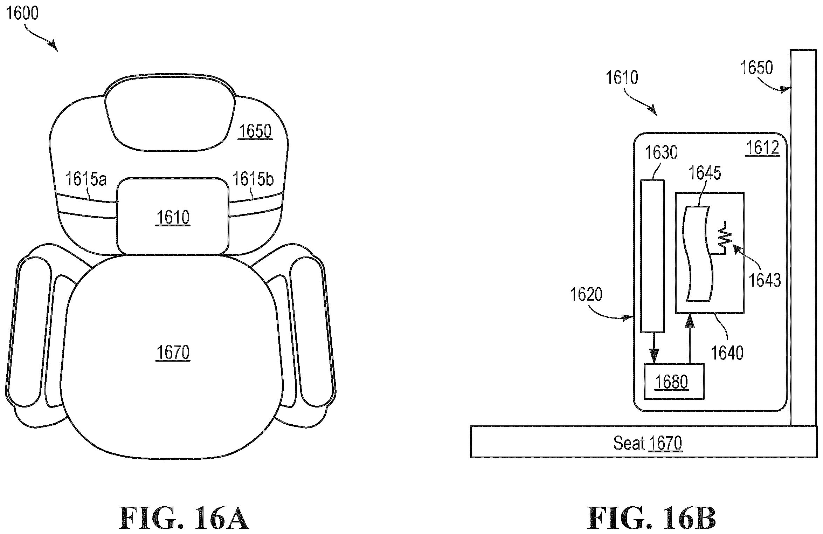

**FIG. 16A** shows an example backrest cushion 1610 with intelligent back support installed onto a chair 1600, and **FIG. 16B** shows an example schematic diagram of the example backrest cushion 1610 in **FIG. 16A.** As illustrated, the backrest cushion 1610 can be removably attached to a chair 1600 using one or more fasteners 1615a, 1615b. In some embodiments, the backrest cushion 1610 does not require any attachment to the chair 1600 for operation; for instance, the backrest cushion 1610 may be placed onto the seat pan 1670 of the chair 1600, against a backrest support surface 1650 of a backrest of the chair 1600.

The backrest cushion 1610 include: a body 1612 having a backrest support surface 1620, a back surface opposing the backrest support surface 1620, a top surface, a bottom surface opposing the top surface, a left surface and a right surface opposing the left surface; a pressure-sensing apparatus 1630 attached to the backrest support surface 1620 for detecting pressure received in a plurality of regions of the backrest support surface 1620; a back support device 1640 attached to the pressure-sensing apparatus 1630, the back support device 1640 configured to displace a portion of the backrest support surface 1620 based on the pressure detected by the pressure-sensing apparatus 1630 in at least one of the plurality of regions of the backrest support surface; and a controller device 1680 connected to the pressure-sensing apparatus 1630 and the back support device 1640, the controller device 1680 configured to control said displacement of the portion of the backrest support surface 1620 by the back support device 1640.

The backrest support surface 1620 is configured for intelligently supporting a back of a human seated within a chair and leaned against the backrest cushion 1610, when the backrest cushion 1610 is placed between the back of the human and the backrest surface 1650 of the chair 1600, with the bottom surface of the cushion 1610 facing the seat or seat pan 1670 of the chair 1600.

In some embodiments, the back support device 1640 includes: a support panel 1645 and a biasing member 1643, the support panel 1645 configured to be deformed by force exerted by the biasing member 1643 and in turn displace the portion of the backrest support surface 1620.

The operations of the back support device 1640, the biasing member 1643, the support panel 1645, the pressure-sensing apparatus 1630, and controller device 1680 are similar to those described above, as was explained for back support device 240, biasing member 243 and support panel 245, the pressure-sensing apparatus 230, and the controller device 280.

The embodiments described in this document provide non-limiting examples of possible implementations of the present technology. Upon review of the present disclosure, a person of ordinary skill in the art will recognize that changes may be made to the embodiments described herein without departing from the scope of the present technology.

**Claims**

1. An aircraft seat for installation in an aircraft cabin, the seat comprising:

   a seat pan frame supporting a seat pan; and
   a backrest assembly comprising:

      a backrest frame connected to the seat pan frame, the backrest frame supporting a backrest surface;
      a pressure-sensing apparatus attached to the backrest surface for detecting pressure received in a plurality of regions of the backrest surface; and
      a back support device attached to the backrest frame and configured to displace a portion of the backrest surface based on the pressure detected in at least one of the plurality of regions of the backrest surface; and

   a controller device connected to the pressure-sensing apparatus and the back support device, the controller device configured to control said displacement of the portion of the backrest surface by the back support device.

**2.** The aircraft seat of claim 1, wherein the pressure-sensing apparatus comprises a resistive pressure sensor.

**3.** The aircraft seat of claim 2, wherein the resistive pressure sensor comprises Velostat™.

**4.** The aircraft seat of claim 1, wherein the plurality of regions correspond to one or more of: an lumbar region, an upper back region, a right bolster region and a left bolster region of the backrest surface.

**5.** The aircraft seat of claim 1, wherein the back support device comprises: a support panel and a biasing member, the support panel configured to be deformed by force exerted by the biasing member and in turn displace the portion of the backrest surface.

**6.** The aircraft seat of claim 5, wherein the biasing member comprises a spring made of nickel titanium or nitinol.

**7.** The aircraft seat of claim 6, wherein the controller device is configured to:

receive data from the pressure-sensing apparatus;
calculate a respective average pressure value in each of the plurality of regions of the backrest surface based on the received data;
calculate an error value based on the respective average pressure values;
determine, based on the error value, a target state of the biasing member; and
send electronic signals representing a command to control a current in the biasing member based on the target state.

**8.** The aircraft seat of claim 7, wherein the controller device comprises a current controller and the command is sent to the current controller for adjusting the current in the biasing member.

**9.** The aircraft seat of claim 7, wherein the target state comprises one of: actuation, de-actuation, and hold position.

**10.** The aircraft seat of claim 7, wherein a magnitude of the current is determined based on the target state.

**11.** A back support assembly comprising:

a pressure-sensing apparatus for attachment to a backrest of a chair for detecting pressure received in a plurality of regions of a backrest surface of the backrest;
a back support device for attachment to the backrest, the back support device configured to displace a portion of the backrest surface based on the pressure detected in at least one of the plurality of regions of the backrest surface; and
a controller device connected to the pressure-sensing apparatus and the back support device, the controller device configured to control said displacement of the portion of the backrest surface by the back support device.

**12.** The back support assembly of claim 11, wherein the pressure-sensing apparatus comprises a resistive pressure sensor and optionally wherein the resistive pressure sensor comprises Velostat™ and/or optionally wherein the plurality of regions correspond to one or more of: an lumbar region, an upper back region, a right bolster region and a left bolster region of the backrest surface.

**13.** The back support assembly of claim 11, wherein the back support device comprises: a support panel and a biasing member, the support panel configured to be deformed by force exerted by the biasing member and in turn displace the portion of the backrest surface and optionally wherein the biasing member comprises a spring made of nickel titanium or nitinol and/or optionally wherein the controller device is configured to:

receive data from the pressure-sensing apparatus;
calculate a respective average pressure value in each of the plurality of regions of the backrest surface based on the received data;
calculate an error value based on the respective average pressure values;
determine, based on the error value, a target state of the biasing member; and
send electronic signals representing a command to control a current in the biasing member based on the target state.

**14.** The back support assembly of claim 13, wherein the controller device comprises a current controller and the command is sent to the current controller for adjusting the current in the biasing member.

**15.** The back support assembly of claim 13, wherein the target state comprises one of: actuation, de-actuation, and hold position and optionally wherein a magnitude of the current is determined based on the target state.

FIG. 1

**FIG. 2**

300

Support Surface (facing inward) 220

230

Support Panel 245

Biasing Member 243

Pressure Readings 235

Closed-Loop Control

Controller 280

Current Controller 285

Power Source 290

**FIG. 3**

FIG. 4A

FIG. 4B

EP 4 538 178 A1

**FIG. 5A**

EP 4 538 178 A1

FIG. 5B

**FIG. 5C**

EP 4 538 178 A1

**FIG. 6**

EP 4 538 178 A1

Lumbar Region Force (W)
700

Biasing Force (FS)
720

h

A

B

**FIG. 7A**

EP 4 538 178 A1

Lumbar Region Force (W)
700

Equivalent Biasing Force Moment (Ms)
730

Sagitta (S)

Chord (C)

Biasing Force (FS)
720

**FIG. 7B**

EP 4 538 178 A1

243

**FIG. 7C**

243

**FIG. 7D**

800

Calculated Spring Stiffnesses

| Wire d (m) | $D_{s,inner}$ (m) | $D_s$ (m) | N | Spring (Low) (N/m) | Spring (High) (N/m) |
|---|---|---|---|---|---|
| 0.00125 | 0.00475 | 0.006 | 80.0 | 190.73 | 508.63 |
| 0.00125 | 0.006 | 0.00725 | 80.0 | 108.11 | 288.30 |
| 0.00125 | 0.008 | 0.00925 | 80.0 | 52.05 | 138.81 |
| 0.00125 | 0.0095 | 0.01075 | 80.0 | 33.16 | 88.44 |
| 0.00125 | 0.0127 | 0.01395 | 80.0 | 15.18 | 40.47 |
| 0.0015 | 0.00475 | 0.00625 | 66.7 | 419.90 | 1119.74 |
| 0.0015 | 0.006 | 0.0075 | 66.7 | 243.00 | 648.00 |
| 0.0015 | 0.008 | 0.0095 | 66.7 | 119.57 | 318.85 |
| 0.0015 | 0.0095 | 0.011 | 66.7 | 77.02 | 205.39 |
| 0.0015 | 0.0127 | 0.0142 | 66.7 | 35.80 | 95.48 |
| 0.002 | 0.00475 | 0.00675 | 50.0 | 1404.66 | 3745.77 |
| 0.002 | 0.006 | 0.008 | 50.0 | 843.75 | 2250.00 |
| 0.002 | 0.008 | 0.01 | 50.0 | 432.00 | 1152.00 |
| 0.002 | 0.0095 | 0.0115 | 50.0 | 284.05 | 757.46 |
| 0.002 | 0.0127 | 0.0147 | 50.0 | 136.00 | 362.66 |

**FIG. 8**

Layer 1: Vinyl
910

Layer 2: Copper
920

Layer 3: Velostat
930

Layer 4: Copper
940

Layer 5: Vinyl
950

**FIG. 9**

Controller 280

FIG. 10A

1050

FIG. 10B

EP 4 538 178 A1

**FIG. 11**

Time vs. Displacement for a Spring Under Blasting Current

Test Data
Trinomial Function

Displacement

Time (s)

**FIG. 12**

1200

FIG. 13

1400

| | Design 1 | Design 2 | Design 3 | Design 4 |
|---|---|---|---|---|
| Means of Plate Manipulation | Rigid | Rigid | Rigid | Flexible |
| Actuators | 4 | 4 | 4 | 1 |
| Mobility of system | 6 | 1 (Z-axis only) | 3 (Z-axis + X/Y rotation) | 1 (Z-axis only) |
| Heat shielding/stock availability | Yes | Yes | Yes | Yes |
| Additional material processing | Wire snipping | Holes and/or cutting | Holes and/or cutting | Wire snipping |
| Ease of seat mounting on office chair | Easy | Easy | Easy | Easiest w/drop-in |
| Resting Shape Return | Extra parts needed | Extra parts needed | Extra parts needed | Returns by itself |

**FIG. 14**

EP 4 538 178 A1

1500

10 kPa−
9 kPa−
8 kPa−
7 kPa−
6 kPa−
5 kPa−
4 kPa−
3 kPa−
2 kPa−
1 kPa−

Lumbar Area
Pavg = 5.0kPa

Pressure Heat Map Before Run

FIG. 15A

EP 4 538 178 A1

Pressure Heat Map After Run

**FIG. 15B**

EP 4 538 178 A1

**FIG. 16B**

**FIG. 16A**

Europäisches
Patentamt

European
Patent Office

Office européen
des brevets

# EUROPEAN SEARCH REPORT

**Application Number**

EP 24 20 6253

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/031057 A1 (BOCCUCCIA DANIEL [US] ET AL) 31 January 2019 (2019-01-31) | 1,2,4,5, 11-13 | INV. B64D11/06 |
| Y | * paragraphs [0028], [0033], [0039]; figures 2,5 * | 3,12 | B60N2/66 |
| X | US 2018/105274 A1 (UDRISTE DANIEL I [US] ET AL) 19 April 2018 (2018-04-19) * paragraphs [0070], [0072], [0085]; figures 1-7 * | 1,5-11, 13-15 | |
| X | US 2017/158088 A1 (PIKE MASON [US] ET AL) 8 June 2017 (2017-06-08) * paragraphs [0016], [0031]; figures 1-7 * | 1,2,4,5, 11-13 | |
| Y | WO 2021/152847 A1 (ISHAC KARLOS [JP]; BOURAHMOUNE KATIA [JP]) 5 August 2021 (2021-08-05) * paragraph [0031] * | 3,12 | |
| A | US 2013/180531 A1 (CHOI GEORGE Y [US] ET AL) 18 July 2013 (2013-07-18) * paragraph [0108] * | 6,13 | **TECHNICAL FIELDS SEARCHED (IPC)** B64D B60N A47C |

The present search report has been drawn up for all claims

| Place of search | Date of completion of the search | Examiner |
|---|---|---|
| Munich | 30 October 2024 | Cetiner-Fresneda, B |

EPO FORM 1503 03.82 (P04C01)

## ANNEX TO THE EUROPEAN SEARCH REPORT
## ON EUROPEAN PATENT APPLICATION NO.

EP 24 20 6253

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2024

| Patent document cited in search report | Publication date | Patent family member(s) | Publication date |
|---|---|---|---|
| US 2019031057 A1 | 31-01-2019 | CN 109305076 A | 05-02-2019 |
| | | DE 102018118156 A1 | 31-01-2019 |
| | | US 2019031057 A1 | 31-01-2019 |
| | | US 2019031058 A1 | 31-01-2019 |
| US 2018105274 A1 | 19-04-2018 | CA 3013671 A1 | 26-04-2018 |
| | | CN 108883834 A | 23-11-2018 |
| | | EP 3529154 A1 | 28-08-2019 |
| | | US 2018105274 A1 | 19-04-2018 |
| | | WO 2018075206 A1 | 26-04-2018 |
| US 2017158088 A1 | 08-06-2017 | NONE | |
| WO 2021152847 A1 | 05-08-2021 | US 2023056977 A1 | 23-02-2023 |
| | | WO 2021152847 A1 | 05-08-2021 |
| US 2013180531 A1 | 18-07-2013 | US 2013180531 A1 | 18-07-2013 |
| | | US 2013298918 A1 | 14-11-2013 |
| | | US 2020155337 A1 | 21-05-2020 |
| | | US 2023123631 A1 | 20-04-2023 |

EPO FORM P0459

For more details about this annex : see Official Journal of the European Patent Office, No. 12/82